# EUROPEAN PATENT APPLICATION

(11) **EP 2 273 248 A1**
(43) Date of publication of application: **12.01.2011**
(21) Application number: 10167586.6
(22) Date of filing: 28.06.2010
(51) Int. Cl.: G01M 13/02

(54) **Torque applicator and closed-loop test rig**

(30) Priority: 07.07.2009 IT MI20091199
(71) Applicant: Rodriquez Marine System Srl, 98122 Messina (IT)
(72) Inventor: Rossi, Roberto, 19038, Sarzana (IT)
(74) Representative: Simino, Massimo

(57) **Abstract**

The present invention relates to a closed-loop test rig (100). It comprises a motor (40), a first perpendicular-axis gear unit (10) and a second perpendicular-axis gear unit (20), identical to the first. The motor is connected to the first gear unit. One shaft (12) of the first gear unit is rigidly connected to the corresponding shaft (22) of the second gear unit. Finally, the other shaft (11) of the first gear unit is connected to the corresponding shaft (21) of the second gear unit by means of a torque applicator (30) of the invention. The torque applicator of the invention is adapted to impart relative rotation between a first drive shaft (11) and a second drive shaft (21) in mutual coaxial relation. The torque applicator has a first flange (110) coaxial with the first shaft 11 and a second flange (210) coaxial with the second shaft (31), and a plurality of linear actuators (31). Each of the linear actuators has a first end (311) and a second end (312) and is adapted to impart a linear displacement of the first and the second ends toward or away from each other. The first ends are linked to the first flange and the second ends are linked to the second flange. The torque applicator further comprises a plurality of feed lines (32) adapted to feed the linear actuators. The feed lines are integral with one of said shafts and have accesses (320) adapted to ensure feeding during rotation of the shaft.

## Description

The present invention relates to a torque applicator and a closed-loop test rig for testing gear units, particularly a closed-loop test rig for testing high power gear units.

A test rig is known to be an apparatus for testing a machine member, in this case a power transmission unit known for simplicity as a gear unit.

Test rigs for mechanical gear units can perform a variety of analyses, including: durability tests on the whole component or parts thereof; wear checks on the whole component or parts thereof; performance measurements; noise measurements; vibration tests; and lubrication efficiency checks.

Furthermore, if tests are performed on gears characterized by peripheral speeds higher than the values required in the usual design standards, e.g. designed for aeronautical use, a study on scuffing or reduction of surface hardness caused by increases in temperature may be also conducted.

Assessment of the performances of the gear unit requires simulation of the conditions of use and stress, from the lightest to the heaviest conditions. This obviously requires the test rig to be able to handle the same power flow for which the gear unit is designed in its actual use.

In gear units designed for low power flows, test rigs are known to be used, which include an electric motor upstream and a brake downstream from the gear unit. In test rig simulation, the motor delivers powers to the gear unit and the brake dissipates it, thereby simulating the effect of resisting forces and frictions generated in actual use.

Nevertheless, this configuration is unsuitable for handling high powers, due to the sizes of the test rig (in terms of motor and brake) and the amount of dissipated energy.

For this reason, closed-loop power recirculating test rigs are known to be used. This configuration is obtained by connecting two identical gear units: the gear unit being tested and the transfer gear unit.

These opposed gear units have the fast and slow axes connected respectively, by drive shafts or flanges. Thus, the motor of the rig can feed the mechanical circuit with the power dissipated by internal gear frictions only. Nevertheless, this situation simulates operation under almost no load conditions. Heavier operating conditions may be simulated by applying an appropriate torsional preload to an axis of the rig.- Such torsional load initiates the desired power flow in the mechanical circuit, as a function of the angular velocity imparted by the external motor. In other words, a power similar to that of actual use circulates in the circuit formed by the test rig, whereas the motor of the rig only delivers the power required to compensate for internal losses.

While this closed-loop test rig configuration proves to be highly advantageous, it still has a few drawbacks.

The torsional preload is usually applied with the rig at rest, by imparting a relative rotation between two connecting flanges of the two gear unit shafts, and by fixing together the flanges in such position. The test rig may be started at the end of this step, for desired testing or inspection.

Nevertheless, this method of imparting the torsional load allows operation on parallel-axis gear units and not on perpendicular-axis ones. Where the gear units include bevel gears, any application of a static preload would cause sticking of meshed teeth, with the transmission being substantially blocked. The application of a torque that might overcome the sticking resistance would cause serious damages to the surface of the teeth or even breaking.

High power perpendicular-axis gear units are widely used in marine and helicopter applications.

Therefore, the purpose of the present invention is to obviate the prior art drawbacks as detailed above.

Particularly, the present invention has the object of providing a closed-loop rest rig designed for high power perpendicular-axis gear units.

The above purpose and object are fulfilled by a torque applicator as defined in claim 1 and a closed-loop test rig as defined in claim 2.

The features and additional advantages of the invention will appear from the following description which is given by way of illustration and without limitation with reference to the accompanying drawings, in which:
- Figure 1 is a schematic view of a marine gear unit placed in a general watercraft;
- Figure 2 is a detailed view of the marine gear unit of Figure 1;
- Figure 3 is a schematic view of a helicopter gear unit placed in a general helicopter;
- Figure 4 shows the closed-loop test rig of the invention;
- Figure 5 is an enlarged view of a torque applicator of the invention, designated V in Figure 4;
- Figure 6 is an axial view of the torque applicator of Figure 5;
- Figure 7 is a schematic simplified view of a torque applicator of the invention, designated VII in Figure 5;
- Figure 8.a is a cross sectional view taken along VIII - VIII of Figure 5, in a first configuration;

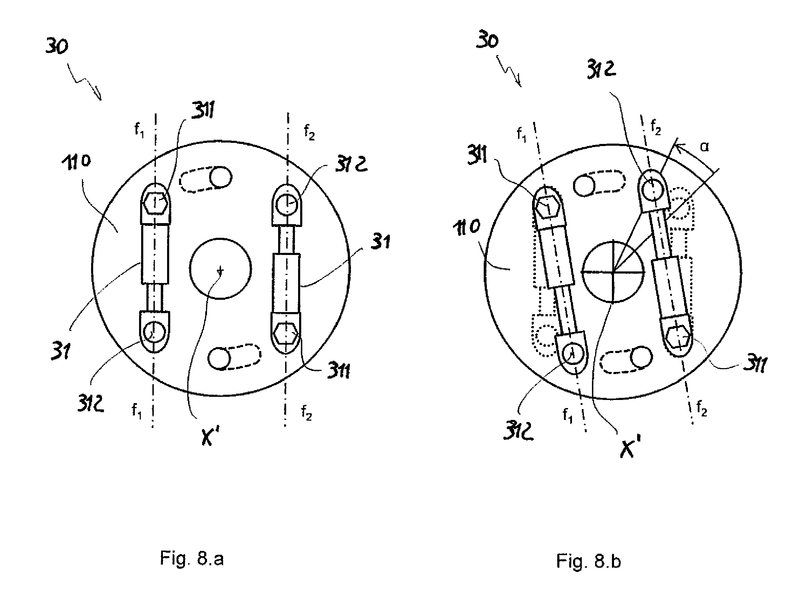

- Figure 8.b is a view of the cross section of Figure 8.a, in a second configuration.

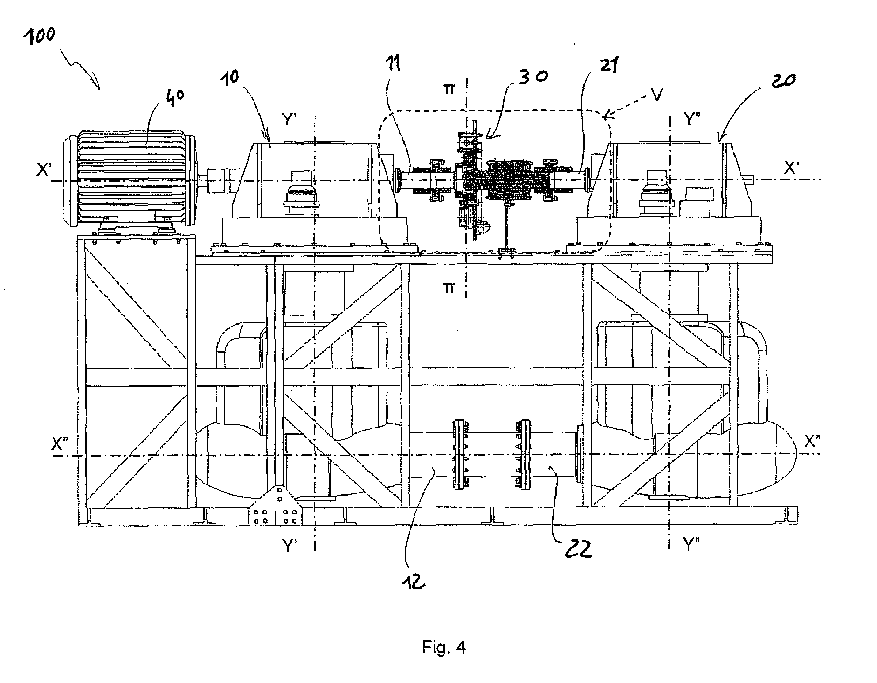

With particular reference to Figure 4, a closed-loop test rig is generally designated 100. The closed-loop test rig 100 comprises a motor 40, a first perpendicular-axis gear unit 10 and a second perpendicular-axis gear unit 20, identical to the first. The motor 40 is connected to the first gear unit 10. One shaft 12 of the first gear unit 10 is rigidly connected to the corresponding shaft 22 of the second gear unit 20. Finally, the other shaft 11 of the first gear unit 10 is connected to the corresponding shaft 21 of the second gear unit 20 by means of a torque applicator 30 of the invention.

The torque applicator 30 of the invention is adapted to impart relative rotation between a first drive shaft 11 and a second drive shaft 21 in mutual coaxial relation. The torque applicator 30 has a first flange 110 coaxial with the first shaft 11 and a second flange 210 coaxial with the second shaft 21. The torque applicator 30 also comprises a plurality of linear actuators 31. Each of the linear actuators has a first end 311 and a second end 312 and is adapted to impart a linear displacement of the first and the second ends toward or away from each other. The first ends 311 are linked to the first flange 110 and the second ends 312 are linked to the second flange 210. The torque applicator 30 further comprises a plurality of feed lines 32 adapted to feed the linear actuators 31. The feed lines 32 are integral with one of said shafts, e.g. the second shaft 21, and have accesses 320 adapted to ensure feeding during rotation of the shaft 21. In the torque applicator 30 of the invention, the action of the linear actuators 31 is adapted to impart relative rotation between the first flange 110 and the second flange 210.

Therefore, the test rig 100 defines a closed mechanical circuit in which power circulates along four perpendicular axes, in pairs. According to the embodiment of Figure 4, the first axis X' is defined by the rotation of the fast shafts 11 and 21 of the gear units 10 and 20. Two more axes Y' and Y" are defined by the rotation of the intermediate shafts of the gear units 10 and 20. Finally, the last axis X" is defined by the rotation of the slow shafts 12 and 22 of the gear units 10 and 20. X' and X" are parallel, as well as Y' and Y". X' and X" are perpendicular to Y' and Y". Reference will be always made hereinafter to X' because, in the embodiment of Figure 4, this is the axis about which the torque generated by the torque applicator 30 is applied.

Unless otherwise stated, the term axial direction indicates the direction of a line parallel to X'. The term radial direction indicates the direction of a half-line which has X' as a point of origin and is perpendicular thereto. Finally, the term tangential direction indicates the direction of a line that is tangent to a circumference having X' as its center and is contained in a plane perpendicular thereto.

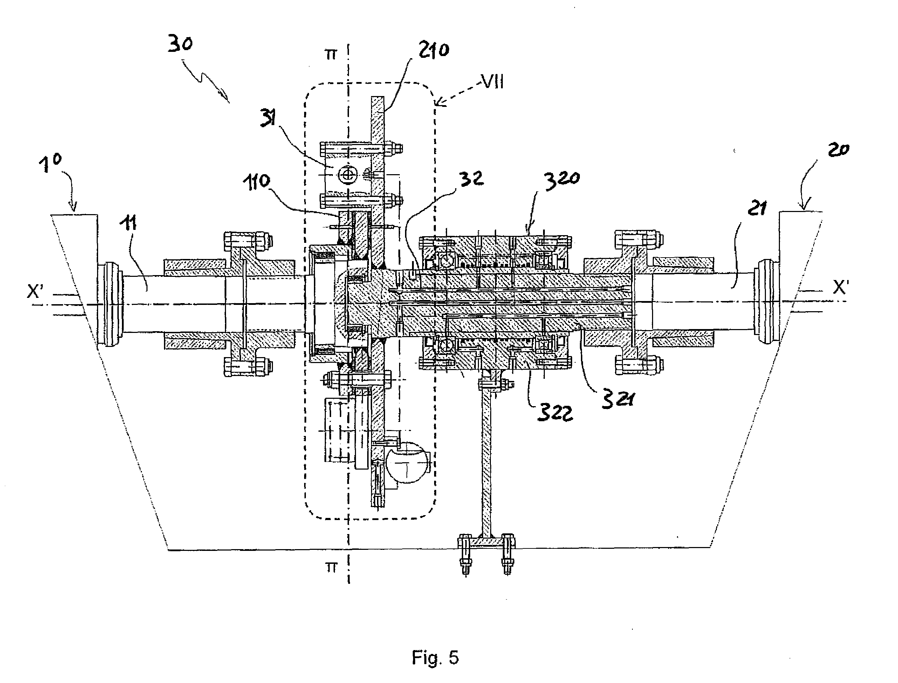

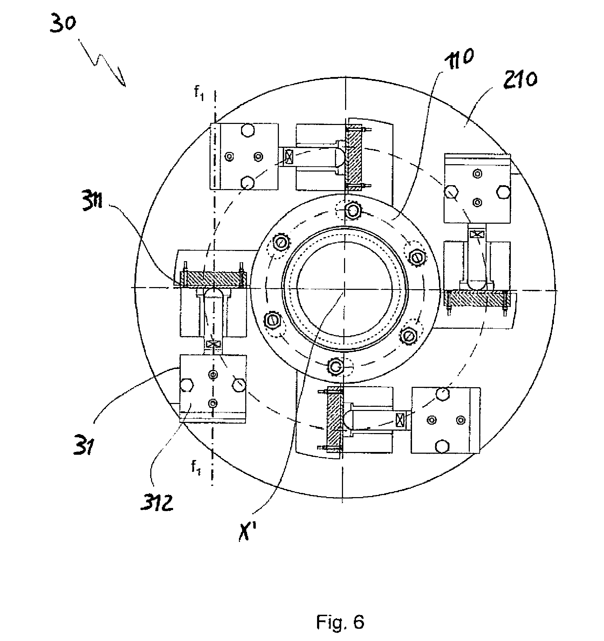

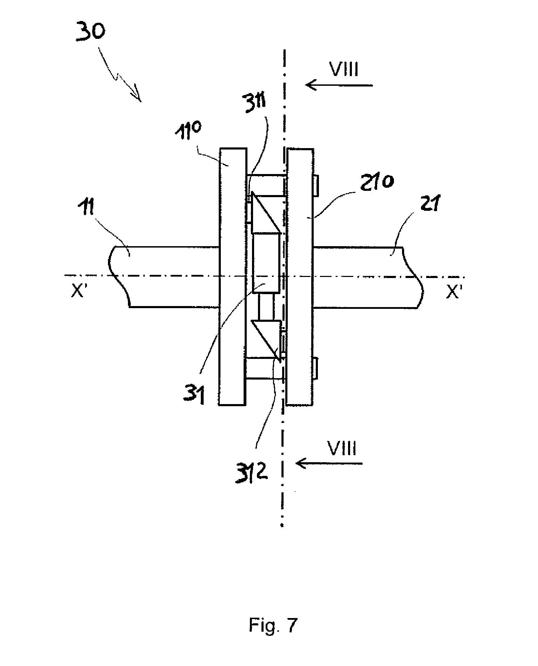

One embodiment of the torque applicator 30 of the invention is shown in detail in Figures 5 and 6. An operation diagram, which is simplified with respect to the actual implementation for easier understanding, is shown in Figures 7 and 8.

Each of the linear actuators 31 defines an axis f, along which linear displacement either toward or away from the first end 311 and the second end 312 occurs. The axes f of the linear actuators 31 preferably lie on a plane n perpendicular to the axis X', which are tangentially oriented. This prevents the force generated by the actuators 31 to have radial and/or axial components.

The links between the flanges 110 and 210 and the ends 311 and 312 of the actuators 31 shall generally allow relative rotation on the plane π. This effect is obtained in different manners in the actual embodiment of figures 5 and 6 and the simplified diagram of Figures 7 and 8.

According to the embodiment of Figures 5 and 6, the second end 312 of each linear actuator 31 is bolted to the second flange 210. Rotation on the plane π between the actuator and the second flange 210 is thus prevented. However, at the first end 311, a hemispherical surface movable along the axis f presses against a flat surface integral with the first flange 110. This will allow rotation between the linear actuator 31 and the first flange 110 on the plane π.

In a different manner, in the diagram of Figures 7 and 8, both ends 311 and 312 of the linear actuators 31 are fastened to their respective flanges 110 and 210 by pivots that allow mutual rotation on the plane π.

According to the embodiments as shown in the accompanying figures, the linear actuators 31 are hydraulic actuators. In this embodiment, the feed lines 32 are conduits adapted to contain a pressurized fluid, typically oil. The feed lines 32 are advantageously formed in a particular section 312 of one of the two drive shafts, e.g. the shaft 21. The accesses 320 to the feed lines 32 are formed by a suitable sleeve 32 with annular chambers formed therein, around the section 321 of the shaft 21, and axially spaced therealong. Each of the feed lines 32 has a port that opens into one of said annular chambers. Thus, the pressurized fluid fed to the annular chambers may access the feed lines 32 even during rotation of the shaft 21.

According to the embodiment of Figures 5 and 6, the linear actuators 31 are single effect actuators. The action of actuators is constantly opposed by the elastic reaction of the members that compose the mechanical circuit of the test rig 100. For this reason, referring to Figure 6, the linear actuators 31 are simply required to impart a clockwise displacement to the first ends 311 and a counterclockwise displacement to the second ends 312. An opposite displacement, with the first ends 311 being rotated counterclockwise and the second ends clockwise, is simply obtained by elastic return of the members of the mechanical circuit.

Therefore, the action of the actuators 31 introduces an angle of torsion α between the two flanges 110 and 210. α is advantageously deemed to be zero, when the flanges 110 and 210 are in adjacent positions, with no torsional stress being applied thereto. The creation of an angle of torsion α between the two flanges 110 and 210 from this rest position generates a proportional torsional stress in the mechanical circuit. Figure 8.b shows for clarity an angle α of 10°, but in practice maximum gear unit testing torques may be also obtained with a maximum value of α of about 6°÷7°. It should be noted that the torque applicator 30 of the invention has been conceived to generate smaller angles α; if angles α larger than 10° were required, the torque applicator 30 would have to be adapted to the different kinematic conditions that would occur.

According to further embodiments, which are designed to meet other possible needs, the linear actuators 31 may be pneumatic actuators or electric actuators of the rack and worm, rack and pinion or other types.

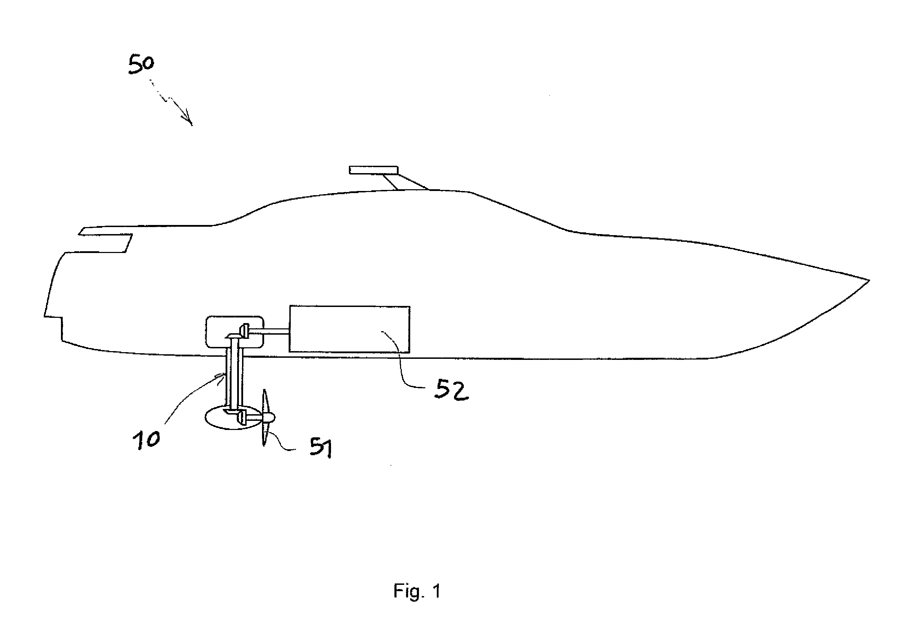

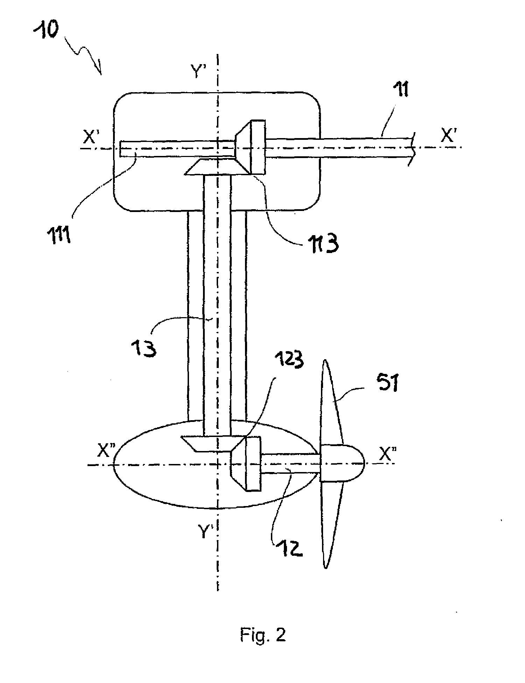

Particularly referring to Figure 4, the operation of a test rig 100 of the invention will be described below. The test rig 100 comprises a motor 40 and two identical perpendicular-axis gear units 10 and 20. In the embodiment herein, the gear units 10 and 20 are as used in marine constructions and schematically shown in Figures 1 and 2. Particularly referring to Figure 2, the first gear unit 10 is described below in greater detail, the same considerations also apply to the second gear unit 20.

The gear unit 10 comprises a fast shaft 11, an intermediate shaft 13 and a slow shaft 12. A first bevel gear 113 connects the fast shaft 11 to the intermediate shaft 13 and a second bevel gear 123 connects the intermediate shaft 13 to the slow shaft 12. A first axis X' is defined by the rotation of the fast shaft 11, a second axis Y' is defined by the rotation of the intermediate shaft 13 and finally a last axis X" is defined by the rotation of the slow shaft 12. The axes X' and X" are parallel to each other and perpendicular to the axis Y'.

In the actual use of the gear unit 10 on a watercraft 50 (as schematically shown in Figure 1), the fast shaft 11 is connected to the motor 52 and the slow shaft 12 is connected to the propeller 51. Therefore, in the actual use of the gear unit 10 a power flow is established, which is delivered by the motor 52 and is used by the propeller 51 for propelling the watercraft 50.

For assembly of the test rig 100, the gear unit 10 is removed from the watercraft 50, the fast shaft 11 is disconnected from the motor 52 and the slow shaft 12 is disconnected from the propeller 51. The same is done with a second gear unit 20. The two gear units are placed in front of each other for their respective fast shafts 11 and 21 to share the axis X' and their respective slow shafts 12 and 22 to share the axis X". Two shafts (e.g. the fast shafts 11 and 21) are connected by a torque applicator 30 as described above, whereas the other two shafts (the slow shafts 12 and 22) are rigidly connected by a simple extension. The test rig 100 of the invention is completed by a motor 40, preferably an electric motor, which is connected to one of the two gear units, e.g. the first gear unit 10. For connection of the motor 40, the extension 111 of the fast shafts 11 (see Figure 2), provided if a power take-off is required in the watercraft 50, may be advantageously utilized.

Therefore, a test rig 100 as described above defines a mechanically closed circuit, with four shafts and four bevel gears. For the desired tests to be performed on either one of the two gear units 10 and/or 20, the torque applicator 30 must be in the rest position (i.e. with α = 0°). Then the test rig 100 shall be started by the motor 40, and the members of the test rig will reach the desired angular velocities. In this conditions, there will be a minimum power circulating in the test rig 100, due to the lack of resisting torques, excepting those generated by frictions and resistances within the gear units. Therefore, while this condition provides the same rotation speeds as those that may be achieved in actual use, it is not useful for the purposes of testing, because the circulating power, and hence the stresses exerted in the gear units are not comparable to those that may occur in actual use. In order to increase the circulating power, the torque applicator 30 is operated. The torque applied by the torque applicator 30, multiplied by the angular velocity, provides the power circulating in the mechanical circuit of the test rig 100.

It will be appreciated that the test rig 100 of the invention allows torque application when the bevel gears of the gear unit are already rotating. Any attempt to apply a similar torque to stationary gear units would cause the teeth of the bevel gears to stick and prevent rotation thereof.

It will be further appreciated that, with a test rig 100 of the invention, the power that circulates in the mechanical circuit simulates the power developed in the actual use of the gear unit (in this example 1050 kW). This power flow may be obtained with a definitely less powerful motor 40 (in this example 110 kW), because the only power to be delivered to the mechanical circuit is the power required to overcome internal resistances.

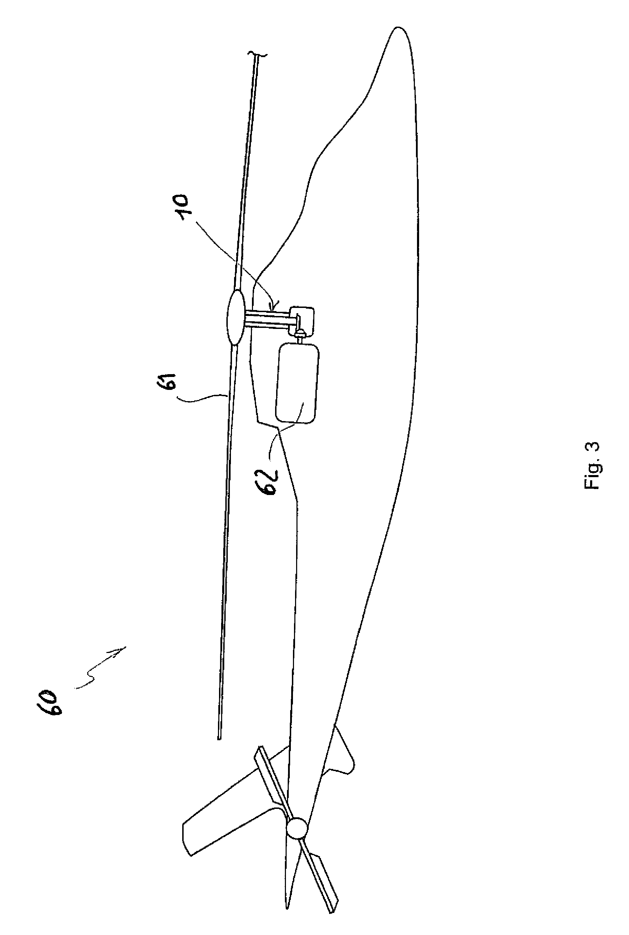

A test rig 100 of the invention as described above may be also usefully employed for testing gear units for helicopter applications. A similar gear unit is schematically shown in Figure 3, whereas the corresponding test rig is not shown in the annexed figures. As shown in figure 3, the gear unit 10 comprises a fast shaft 11 and a slow shaft 12. A bevel gear connects the fast shaft 11 to the slow shaft 12. A first axis X' is defined by the rotation of the fast shaft 11, a second axis Y' is defined by the rotation of the slow shaft 12. The axes X' and Y' are perpendicular to each other. In the actual use of the gear unit 10 on a helicopter 60 (as schematically shown in Figure 3), the fast shaft 11 is connected to the motor 62 and the slow shaft 12 is connected to main rotor 61. Therefore, in the actual use of the gear unit 10 a power flow is established, which is delivered by the motor 62 and is used by the main rotor 61 for lifting and propelling the helicopter 60.

For assembly of the test rig 100, the gear unit 10 is thus removed from the helicopter 60, the fast shaft 11 is disconnected from the motor 62 and the slow shaft 12 is disconnected from the main rotor 61. The same is done with a second gear unit 20. The two gear units are placed in front of each other for their respective fast shafts 11 and 21 to share the axis X' and their respective slow shafts 12 and 22 to define parallel axes Y' and Y". Two shafts (e.g. the fast shafts 11 and 21) are connected by a torque applicator 30 as described above, whereas the other two shafts (the slow shafts 12 and 22) shall be rigidly connected by an extension having two identical bevel gears at its ends, to close the mechanical circuit. Therefore, this test rig 100 defines a mechanically closed circuit, with four shafts and four bevel gears. As mentioned above, the test rig 100 of the invention is completed by a motor 40, which is connected to one of the two gear units, e.g. the first gear unit 10.

Within the embodiments of the test rig 100 and the torque applicator 30 as described above, the skilled person may make changes to and/or replace elements described above with equivalent elements, without departure from the scope of the accompanying claims.

## Claims

1. A torque applicator (30) for imparting relative rotation between first and second drive shafts (11, 21) in mutual coaxial relation, said torque applicator (30) comprising:
- a first flange (110) coaxial with the first shaft (11) and a second flange (210) coaxial with the second shaft (21);
- a plurality of linear actuators (31), each linear actuator having a first end (311) and a second end (312) and being adapted to impart a linear displacement of the first and second ends toward or away from each other, wherein the first ends (311) are linked to the first flange (110) and the second ends (312) are linked to the second flange (210);
- a plurality of feed lines (32) for feeding the linear actuators (31), the feed lines (32) being integral with one of said shafts (21) and having accesses (320) for ensuring feeding during rotation of the shaft (21);
wherein the action of the linear actuators (31) is adapted to impart relative rotation between the first flange (110) and the second flange (210).

2. A torque applicator (30) as claimed in claim 1, wherein each of the linear actuators (31) defines an axis f, along which linear displacement occurs, the axes of the linear actuators (31) lying on a plane π perpendicular to the axis X' of the drive shafts (11,21) and being oriented tangent to such axis X'.

3. A torque applicator (30) as claimed in claim 2, wherein the links between the flanges (110, 210) and the ends (311, 312) of the actuators (31) shall generally allow relative rotation on the plane π.

4. A torque applicator (30) as claimed in any one of claims 1 to 3, wherein the linear actuators (31) are hydraulic actuators and the feed lines (32) are adapted to contain a pressurized fluid.

5. A torque applicator (30) as claimed in the preceding claim, wherein the accesses (320) to the feed lines (32) are obtained by means of a sleeve (322) in which annular chambers are formed around the shaft (21) and axially spaced therealong, each of the feed lines (32) having a port that opens into one of said annular chambers, so that the pressurized fluid that is fed to the annular chambers can access the feed lines (32) even during rotation of the shaft (21).

6. A torque applicator (30) as claimed in any of the preceding claims 1 to 5, wherein the action of the actuators (31) introduces an angle of torsion α between the two flanges (110, 210) from 0° to 10°, such angle α being zero when the flanges (110, 210) are in adjacent positions with no torsional stress being applied thereto.

7. A torque applicator (30) as claimed in any one of claims 1 to 6, wherein the linear actuators (31) are single effect actuators adapted to impart a displacement in one direction whereas the displacement in the opposite direction is obtained by elastic return.

8. A closed-loop test rig (100) comprising a motor (40), a first perpendicular-axis gear unit (10), a second perpendicular-axis gear unit (20), identical to the first, wherein:
- the motor (40) is connected to the first gear unit (10);
- one shaft (12) of said first gear unit (10) is rigidly connected to the corresponding shaft (22) of the second gear unit (20); and
- the other shaft (11) of the first gear unit (10) is connected to the corresponding shaft (21) of the second gear unit (20) by means of a torque applicator (30) as claimed in any of claims 1 to 7.

9. A test rig (100) as claimed in claim 8, wherein the gear units (10, 20) are of the type adapted for use in watercrafts or helicopters.
